# EUROPEAN PATENT SPECIFICATION

(11) **EP 4 168 462 B1**
(45) Date of publication and mention of the grant of the patent: **29.10.2025**
(21) Application number: 20941348.3
(22) Date of filing: 19.06.2020
(51) Int. Cl.: C08G 18/10, C08G 18/12, B32B 7/12, B32B 27/08, C08G 18/42, C09J 175/06, C08G 18/48, C09J 175/08

(54) **POLYOL COMPOUNDS AND ADHESIVE COMPOSITIONS PREPARED WITH THE SAME**
POLYOLVERBINDUNGEN UND DAMIT HERGESTELLTE KLEBSTOFFZUSAMMENSETZUNGEN
COMPOSÉS DE POLYOL ET COMPOSITIONS ADHÉSIVES PRÉPARÉES À L'AIDE DE CEUX-CI

(43) Date of publication of application: 26.04.2023
(73) Proprietor: Arkema France, 92800 Puteaux (FR)
(72) Inventor: BAI, Chenyan, Shanghai 201203 (CN); SHI, Ke, Shanghai 201204 (CN); QU, Zhaohui, Shanghai 200120 (CN); CHEN, Gaobing, Shanghai 201203 (CN); WANG, Tao, Shanghai 201203 (CN)
(74) Representative: Bandpay & Greuter
(86) International application number: PCT/CN2020/097040
(87) International publication number: WO 2021/253381

(56) References cited:
- EP-A1- 0 340 586
- WO-A1-2019/195066
- WO-A1-2020/215235
- WO-A2-2006/060129
- CN-A- 111 164 122
- US-A1- 2005 107 486
- US-A1- 2010 203 344
- US-A1- 2014 107 288
- US-A1- 2016 200 856

## Description

### FIELD OF THE INVENTION

The present disclosure relates to a novel polyol compound and a method for preparing the same, an adhesive composition comprising said polyol compound and a method for preparing the same, a laminate product comprising an adhesive layer derived from the adhesive composition and a method for preparing the same. The adhesive layer prepared with said adhesive composition exhibits high tolerance to the change in composition and can achieve good bond strength and heat seal strength which will not be substantially deteriorated by the change in the weight ratio between the isocyanate component and the polyol component.

### BACKGROUND

Adhesive compositions are useful for a wide variety of applications. For instance, they can be used to bond substrates such as polyethylenes, polypropylenes, polyesters, polyamides, metals, papers, or cellophanes to form composite films, i.e., laminates. The use of adhesives in different laminating end-use applications is generally known. For example, adhesives can be used in the manufacture of film/film and film/foil laminates commercially used in the packaging industry.

WO-A-2019/195066 relates to a specific mixture of polyols, at least one of which contains the transesterification product of the polymer polylactic acid with natural oils. The mixture of polyols can be used as one component of a two-component adhesive for laminating flexible packaging. The other component comprises an isocyanate-functionalized compound. The two components are combined before use and the resulting adhesive can be used to bond films to form a flexible packaging material.

EP-A-340,586 relates to an adhesive, in particular for film composites, that is Ebuilt up from a hydroxyl-containing component A and at least one isocyanate group-containing component B, component A being a mixture of a hydroxyl-containing oligourethane Ai) and a primary hydroxyl-containing polymer Aii), and component B being the product of the reaction of a polyether ester glycol with a diisocyanate.

WO-A-2006/060129 relates to a two component laminating adhesive comprising Component A and Component B, wherein Component A comprises at least one isocyanate-functionalized compound and Component B comprises a curative containing at least about two primary hydroxyl groups per molecule, said curative having been obtained by a process comprising reacting a first polyol containing predominately secondary hydroxyl groups with a stoichiometric excess of a reactant selected from the group consisting of polybasic acids, polybasic acid anhydrides, polybasic acid esters, and polyisocyanates to form an intermediate containing at least about two terminal functional groups per molecule selected from the group consisting of isocyanate, carboxylic acid and carboxylic acid ester and reacting said intermediate with a stoichiometric excess of a second polyol containing predominately primary hydroxyl groups.

Laminating adhesives are widely used in the manufacture of laminates. Among many such known systems, the use of polyurethane based laminating adhesives is preferred because of their many desirable properties including good adhesion, peel strength, heat seal strength and resistance to aggressive filling goods. Nevertheless, two component polyurethane-based adhesives are always facing customer complain regarding ink compatibility issue because there is residual active hydrogen in ink which may consume NCO group in component A. This will lead to the divergence between the real mixing ratio and the designed mixing ratio, and will make the adhesive uncured or sticky. Moreover, the real mixing ratio could be incorrect due to operation mistake or ordinary error, which will also lead to poor performance. To address this issue, it is desired to develop a robust adhesive which can maintain good performance with wide mixing ratio tolerance.

After persistent exploration, we have surprisingly developed a novel polyol compound which can be used for polyurethane adhesive composition to achieve one or more of the above targets.

### SUMMARY OF THE INVENTION

The present disclosure provides a unique polyol compound and a polyurethane adhesive composition comprising the same.

In a first aspect of the present disclosure, the present disclosure provides a polyol compound having a structure represented by Formula I: 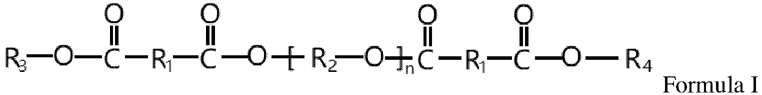 wherein R₁ is a linear C₂-C₁₀ alkylene group which is unsubstituted or substituted with at least one pendant groups selected from the group consisting of C₁-C₅ alkyl, C₁-C₅ alkoxy, hydroxyl, halogen, and combinations thereof; R₂ is a linear C₂-C₈ alkylene group which is either unsubstituted or substituted with at least one pendant groups selected from the group consisting of C₁-C₅ alkyl, C₁-C₅ alkoxy, hydroxyl, halogen, and combinations thereof, preferably the R₂ is a linear C₂-C₈ alkylene group which is unsubstituted; R₃ and R₄ are identical with each other or different from each other, and are independently selected from the group consisting of 2,2-di(methylol)ethyl, 2,2-di(methylol)propyl, 2,2-di(methylol)butyl, and 2,2,2-tri(methylol)ethyl; and n is an integer of 5 to 500, such as 6, 7, 8, 9, 10, 12, 15, 18, 20, 22, 25, 28, 30, 32, 35, 40, 45, 50, 55, 60, 65, 70, 75, 80, 85, 90, 95, 100, 105, 110, 120, 130, 140, 150, 160, 180, 190, 200, 210, 220, 240, 250, 260, 270, 280, 290, 300, 310, 320, 330, 340, 350, 360, 370, 380, 390, 400, 410, 420, 430, 440, 450, 460, 470, 480, 490, 500, or within a numerical range obtained by combing any two of the above end values. According to a preferable embodiment of the present disclosure, R₁ is a linear C₃-C₆ alkylene group which is unsubstituted. According to another preferable embodiment of the present disclosure, R₂ is one of ethylene, propylene or butylene group, or a combination thereof.

According to a preferable embodiment of the present disclosure, all the hydroxyl groups in R₃ and R₄ are primary hydroxyl, and neither R₃ nor R₄ comprises secondary hydroxyl or tertiary hydroxyl.

In a second aspect of the present disclosure, the present disclosure provides a method for preparing the polyol compound of the present disclosure, comprising: i) reacting a dicarboxylic acid compound represented by HOC(O)-R₁-COOH, or anhydride thereof, with a poly(alkylene oxide) represented by HO-[R₂-O]ₙ-H to form an intermediate compound terminated on both ends with carboxyl acid group; and ii) reacting the intermediate compound with a hydroxyl-substituted C₂ to C₈ alkane having at least two primary hydroxyl groups, to form said polyol compound, wherein the hydroxyl-substituted C₂ to C₈ alkane is selected from the group consisting of trimethylolmethane, trimethyolethane, trimethylolpropane, pentaerythritol, and combinations thereof; wherein R₁ is a linear C₂-C₁₀ alkylene group which is unsubstituted or substituted with at least one pendant group selected from the group consisting of C₁-C₅ alkyl, C₁-C₅ alkoxy, hydroxyl, halogen, and combinations thereof; R₂ is a linear C₂-C₈ alkylene group which is unsubstituted or substituted with at least one pendant group selected from the group consisting of C₁-C₅ alkyl, C₁-C₅ alkoxy, hydroxyl, halogen, and combinations thereof; and n is an integer of 5 to 500.

In a third aspect of the present disclosure, the present disclosure provides an adhesive composition, comprising: (A) an isocyanate component comprising a prepolymer with at least two free isocyanate groups; and (B) a polyol component comprises the polyol compound of the present disclosure. According to a preferable embodiment, the prepolymer with at least two free isocyanate groups can be prepared by reacting an isocyanate compound, such as a monomeric isocyanate compound having at least two isocyanate groups, with a polyol, such as the polyol compound of the present disclosure.

Preferably, the adhesive composition comprises any one or any combinations of the following features: the adhesive composition is solventless or may comprise solvent; the polyol compound has a hydroxyl functionality of at least 3, or at least 4; the polyol compound has a hydroxyl functionality of 4.0 to 8.0, such as 4.0, or 5.0, or 6.0, or 7.0, or 8.0; the polyol component further comprises a second polyol selected from the group consisting of polycarbonate polyol, polyether polyol, polyester polyol other than the polyol compound, and combinations thereof; the second polyol has a hydroxyl functionality of at least 1.2, or at least 1.5, or at least 1.6, or at least 1.8, or at least 2.0, or at least 2.2, or at least 2.5, or at least 2.8, or at least 3.0; the polyol component does not comprise polyol whose hydroxyl functionality is less than 1.2, or less than 1.5, or less than 2.0 or less than 3.0; the content of the polyol compound is from 40 wt% to 80 wt%, and the content of the second polyol is from 20 wt% to 60 wt%, based on the total weight of the (B) polyol component; the (A) isocyanate component has an average isocyanate functionality larger than 1.1, such as at least 1.5, or at least 1.8, can be up to 6.0, or up to 5.5, or up to 5.0, or up to 4.5, or up to 4.0, or up to 3.5, or up to 3.0, or up to 2.5, or up to 2.0, or up to 1.8, or up to 1.5; the prepolymer of the (A) isocyanate component has an average isocyanate functionality of larger than 1.1, such as at least 1.5, or at least 1.8, can be up to 6.0, or up to 5.0, or up to 4.0, or up to 3.0, or up to 2.0; all the hydroxyl groups contained in the polyol compound of the present disclosure are primary hydroxyl groups; all the hydroxyl groups contained in the polyol component are primary hydroxyl groups; the polyol compound has a number average molecular weight Mn of at least 300, such as from 400 to 3,000, or from 400 to 2,000, or from 400 to 1,000; and the weight ratio between the (A) isocyanate component and the (B) polyol component is from 100:30 to 100: 100.

In a fourth aspect of the present disclosure, the present disclosure provides a method for preparing the adhesive composition of the present disclosure, comprising the steps of
(I) providing the isocyanate component, and
(II) providing the polyol compound by i) reacting a dicarboxylic acid compound
represented by HOC(O)-R₁-COOH, or anhydride thereof, with a poly(alkylene oxide) represented by HO-[R₂-O]ₙ-H to form an intermediate compound terminated on both ends with carboxyl acid group; ii) reacting the intermediate compound with a hydroxyl-substituted C₂ to C₈ alkane having at least two primary hydroxyl groups, to form said polyol compound; wherein R₁ is a linear C₂-C₁₀ alkylene group which is unsubstituted or substituted with at least one pendant group selected from the group consisting of C₁-C₅ alkyl, C₁-C₅ alkoxy, hydroxyl, halogen, and combinations thereof; R₂ is a linear C₂-C₈ alkylene group which is unsubstituted or substituted with at least one pendant group selected from the group consisting of C₁-C₅ alkyl, C₁-C₅ alkoxy, hydroxyl, halogen, and combinations thereof; and n is an integer of 5 to 500; and iii) optionally, blending the polyol compound with a second polyol selected from the group consisting of polycarbonate polyol, polyether polyol, polyester polyol other than the polyol compound, and combinations thereof, wherein the isocyanate component and the polyol component are stored and transported in separate packages.

According to various embodiments of the present disclosure, the adhesive composition is a two-component adhesive, wherein the isocyanate component and the polyol component are stored and transported in separate packages, and are combined immediately before being applied to any objects.

In a fifth aspect of the present disclosure, the present disclosure provides a method for preparing a laminate article with the adhesive composition of the present disclosure, comprising the steps of providing a first substrate and a second substrate, mixing the isocyanate component with the polyol component to form a curable mixture; adhering the first substrate to the second substrate by using a layer of the curable mixture; and curing the curable mixture, or allowing it to cure.

In a sixth aspect of the present disclosure, the present disclosure provides a laminate article comprising at least two substrates and an adhesive layer sandwiched therebetween, wherein the adhesive layer is formed by the reaction between the (A) isocyanate component and the (B) polyol component of the adhesive composition.

It is to be understood that both the foregoing general description and the following detailed description are exemplary and explanatory only and are not restrictive of the invention, as claimed.

### BRIEF DESCRIPTION OF THE DRAWINGS

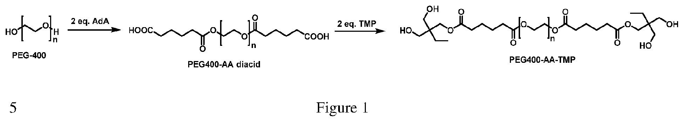

Figure 1 shows the mechanism of the two step reaction for preparing the polyol compound according to one embodiment of the present disclosure.

### DETAILED DESCRIPTION OF THE INVENTION

Unless defined otherwise, all technical and scientific terms used herein have the same meaning as commonly understood by one of ordinary skill in the art to which the invention belongs. Also, all publications, patent applications, patents, and other references mentioned herein are incorporated by reference.

As disclosed herein, "and/or" means "and, or as an alternative". All ranges include endpoints unless otherwise indicated.

As disclosed herein, unless indicated otherwise, the term "polyol compound" or "polyol compound according to the present disclosure" specifically refer to the novel polyol compound developed by the present disclosure.

According to various embodiments of the present disclosure, the adhesive composition is a "two-part" or "two-package" composition comprising an isocyanate component (A) and a polyol component (B) comprising the polyol compound of the present disclosure, which is prepared with a two-step reaction of (i) reacting a dicarboxylic acid with a first polyol to obtain an intermediate compound terminated with carboxyl groups, and (ii) reacting the intermediate compound with a hydroxyl-substituted C₂ to C₈ alkane having at least two primary hydroxyl groups. The particularly defined polyol compound can properly impart desirable properties to the adhesive composition and the adhesive layer prepared therefrom. According to a preferable embodiment, the isocyanate component (A) and the polyol component (B) are transported and stored separately, combined shortly or immediately before being applied during the manufacture of the laminate article.

### The Isocyanate Component (A)

According to an embodiment of the present disclosure, the isocyanate component (A) has an average NCO functionality of at least about 1.5, preferably from about 2 to 10, more preferably from about 2 to about 8, more preferably from about 2 to about 6, and most preferably about 2. Preferably, the isocyanate component (A) has an average NCO functionality of 2.0.

According to a preferable embodiment, prepolymer contained in the isocyanate component is a formed by the reaction of (i) one or more isocyanate compounds comprising at least two isocyanate groups, preferably comprising two isocyanate groups, with (ii) one or more isocyanate-reactive compounds having at least two isocyanate-reactive groups; wherein the prepolymer comprises at least two free isocyanate groups, preferably comprises two free isocyanate groups. According to a preferable embodiment, the isocyanate compound used for preparing the above stated prepolymer is selected from the group consisting of C₄-C₁₂ aliphatic isocyanates comprising at least two isocyanate groups, C₆-C₁₅ cycloaliphatic or aromatic isocyanates comprising at least two isocyanate groups, C₇-C₁₅ araliphatic isocyanates comprising at least two isocyanate groups, and combinations thereof; and is more preferably selected from the group consisting of m-phenylene diisocyanate, 2,4-toluene diisocyanate and/or 2,6-toluene diisocyanate (TDI), the various isomers of diphenylmethanediisocyanate (MDI), carbodiimide modified MDI products, hexamethylene-1,6-diisocyanate, tetramethylene-1,4-diisocyanate, cyclohexane-1,4-diisocyanate, hexahydrotoluene diisocyanate, hydrogenated MDI, naphthylene-1,5-diisocyanate, isophorone diisocyanate (IPDI), isomers of naphthalene-dipolyisocyanate ("NDI") such as 1, 5-NDI, isomers of hexamethylene dipolyisocyanate ("HDI"), isomers of isophorone dipolyisocyanate ("IPDI"), isomers of xylene dipolyisocyanate ("XDI"), or mixtures thereof. According to another preferable embodiment of the present disclosure, the isocyanate-reactive compound used for preparing the above stated prepolymer is selected from the group consisting of monomeric polyfunctional alcohols, such as C₂-C₁₆ aliphatic polyhydric alcohols comprising at least two hydroxy groups, C₆-C₁₅ cycloaliphatic or aromatic polyhydric alcohols comprising at least two hydroxy groups, C₇-C₁₅ araliphatic polyhydric alcohols comprising at least two hydroxy groups; and polymeric polyols, such as polyester polyols, polyether polyols, polycarbonate polyols, a blend of said polyester polyols and polyether polyols, and a combination thereof. According to a preferable embodiment of the present application, the isocyanate-reactive compound used for preparing the above stated prepolymer is one of the above stated monomeric polyol having a hydroxyl functionality of 2.0. According to another preferable embodiment of the present application, the isocyanate-reactive compound used for preparing the above stated prepolymer is one of the above stated monomeric polyol having a hydroxyl functionality of 2.0, and is more preferably a polyester polyol having a hydroxyl functionality of 2.0. According to an embodiment of the present disclosure, the polyester polyol may have a number average molecular weight of about 200 to 5, 000 g/mol, such as 300 to 3,000 g/mol, or 400 to 2,000 g/mol. According to a preferable embodiment of the present disclosure, the polyester polyol has two terminal hydroxyl groups attached to the main chain ends and does not comprise pendent hydroxyl group, more preferably does not comprise any pendent group. According to another embodiment of the present disclosure, the isocyanate-reactive compounds having at least two isocyanate-reactive groups can be the polyol compound of the present disclosure.

In an embodiment of the present disclosure, the isocyanate component (A) only comprises prepolymer and does not comprise any other isocyanate compound.

In some embodiments of the present disclosure, the isocyanate component (A) further comprises one or more monomeric isocyanate compounds which are used in combination with the above stated prepolymer, and suitable monomeric isocyanate compounds may include aromatic, aliphatic, cycloaliphatic and araliphatic monomeric isocyanates having two or more isocyanate groups, such isocyanate compounds selected from the group consisting of C₄-C₁₂ aliphatic isocyanates comprising at least two isocyanate groups, C₆-C₁₅ cycloaliphatic or aromatic isocyanates comprising at least two isocyanate groups, C₇-C₁₅ araliphatic isocyanates comprising at least two isocyanate groups, and combinations thereof; and preferably include m-phenylene diisocyanate, 2,4-toluene diisocyanate and/or 2,6-toluene diisocyanate (TDI), the various isomers of diphenylmethanediisocyanate (MDI), carbodiimide modified MDI products, hexamethylene-1,6-diisocyanate, tetramethylene-1,4-diisocyanate, cyclohexane-1,4-diisocyanate, hexahydrotoluene diisocyanate, hydrogenated MDI, naphthylene-1,5-diisocyanate, isophorone diisocyanate (IPDI), isomers of naphthalene-dipolyisocyanate ("NDI") such as 1, 5-NDI, isomers of hexamethylene dipolyisocyanate ("HDI"), isomers of isophorone dipolyisocyanate ("IPDI"), isomers of xylene dipolyisocyanate ("XDI"), or mixtures thereof.

Compounds having isocyanate groups, such as the above said prepolymer and the optional monomeric isocyanate compound, may be characterized by the parameter " %NCO" which is the amount of isocyanate groups by weight based on the weight of the compound. The parameter % NCO can be measured by the method of ASTM D 2572-97 (2010). According to an embodiment of the present disclose, the prepolymer and the monomeric isocyanate compound may have a %NCO of at least 3 wt%, or at least 5 wt%, or at least 7 wt%. In some embodiments, the isocyanate compound has a %NCO not to exceed 40 wt%, 35wt%, 30 wt%, or 25 wt%, or 22 wt%, or 20 wt%.

According to an embodiment of the present disclosure, the content of the isocyanate compound used for preparing the prepolymer is from 30 wt% to 65 wt%, with the total weight of the isocyanate component (A) being taken as 100 wt%. According to a preferable embodiment of the present disclosure, the content of the isocyanate compound used for preparing the prepolymer can be in the numerical range obtained by combining any two of the following end point values:27 wt%, 30 wt%, 33 wt%, 35 wt%, 40 wt%, 45 wt%, 50 wt%, 55 wt%, 60 wt%, 65 wt% and 70 wt%. According to another preferable embodiment of the present disclosure, the content of the isocyanate-reactive compound for preparing the prepolymer can be in the numerical range obtained by combining any two of the following end point values: 8 wt%, 10 wt%, 12 wt%, 15 wt%, 18 wt%, 20 wt%, 22 wt%, 25 wt%, 28 wt%, 30 wt%, 32 wt%, 35wt%, 37wt%, 40wt%, 42wt%, 45wt%, 48wt%, 50wt%, 52wt%, 54wt%, 55wt%, 57wt%, 60wt%, 62wt%, 65wt%, 67wt%, 70wt%, 72wt%, 75wt%, 80wt%, 82wt% and 85wt%, with the total weight of the isocyanate component (A) being taken as 100 wt%.

### The Polyol Component (B)

According to various embodiments of the present disclosure, the polyol component comprises a unique polyol compound of the present application, which is prepared by (i) reacting a dicarboxylic acid with a first polyol to obtain an intermediate compound terminated with carboxyl groups, and (ii) reacting the intermediate compound with a compound having multiple primary hydroxyl groups.

According to various embodiments of the present disclosure, the dicarboxylic acid can be represented by the general formula HOC(O)-R₁-COOH, where R₁ is an alkylene group comprising from 1 to 10 carbon atoms, preferably the carbon number of R₁ is an integrate of 1, 2, 3, 4, 5, 6, 7, 8, 9 or 10. According to a preferably embodiment of the present disclosure, the dicarboxylic acid is selected from the group consisting of adipic acid, suberic acid, azelaic acid, sebacic acid, phthalic acid, isophthalic acid, phthalic anhydride, and any combinations thereof.

According to various embodiments of the present disclosure, the first polyol can be a polyether polyol derived from ethylene glycol, butylene glycol, diethylene glycol, triethylene glycol, polyalkylene glycols, 1,2-propanediol, 1,3-propanediol, 1,3-butanediol, 1,4-butanediol, 1,6-hexanediol, neopentyl glycol, triols, tetraols, or combinations thereof. The first polyol may further comprise optional copolymerized unites derived from polycarbonate polyol, polyester polyol, and combinations thereof. According to a preferable embodiment of the present disclosure, the first polyol is a polyether polyol, such as a polyethylene glycol or polypropylene glycol. According to another preferable embodiment of the present disclosure, the first polyol is polyethylene glycol or polypropylene glycol having a number average molecular weight Mn of at least 200, or at least 300, or at least 400 g/mol. According to another preferable embodiment of the present disclosure, the first polyol is polyethylene glycol or polypropylene glycol having a hydroxyl functionality of 2.0 and exclusively comprising two hydroxyl terminal groups attached to the main chain ends, i.e. comprising no pendent hydroxyl group.

The mechanism of the reaction between the dicarboxylic acid and the first polyol is shown in Figure 1, wherein the ratio of the dicarboxylic acid and the first polyol is controlled so that the resultant intermediate compound is terminated with carboxyl groups on both of the main chain ends. According to a preferable embodiment of the present disclosure, the first polyol is a polyether polyol comprising two terminal hydroxyl groups and the molar ratio between the dicarboxylic acid and the first polyol is 2:1. According to a preferable embodiment as shown in Figure 1, the first polyol is PEG-400, i.e. polyethylene glycol having a number average molecular weight of about 400 g/mol. According to various embodiments of the present disclosure, the first polyol is a poly(alkylene oxide) (e.g. polyethylene oxide, polypropylene oxide, polybutylene oxide, and blends or copolymers thereof) having a polymerization degree of 5 to 500, such as from 6 to 400, or from 8 to 300, or from 10 to 200, or from 12 to 100, or within a numerical range obtained by combining any two of the above stated end points. According to alternative embodiments of the present disclosure, the first polyol can be a polyether polyol having a number average molecular weight Mn within the numerical range obtained by combining any two of the following end points: 200 g/mol, 300 g/mol, 400 g/mol, 500 g/mol, 600 g/mol, 700 g/mol, 800 g/mol, 900 g/mol, 1,000 g/mol, 1,200 g/mol, 1,500 g/mol, 1,800 g/mol, 2,000 g/mol, 2,200 g/mol, 2,500 g/mol, 2,800 g/mol, 3,000 g/mol, 3,200 g/mol, 3,500 g/mol, 3,800 g/mol, 4,000 g/mol, 4,200 g/mol, 4,500 g/mol, 4,800 g/mol, and 5,000 g/mol.

Then the intermediate compound reacts with a compound comprising at least two primary hydroxyl groups selected from the group consisting of trimethylolmethane, trimethyolethane, trimethylolpropane, or pentaerythritol, preferably at a molar ratio of at least 1:2, more preferably with a molar ratio of 1:2, to form the polyol compound of the present disclosure. According to a preferable embodiment of the present disclosure, the polyol compound of the present disclosure is a hydroxyl terminated high functionality polyester polyol having a hydroxyl functionality of at least 3, or at least 3.5, or at least 4.0, or at least 4.5, or at least 5.0, or at least 5.5, or at least 6.0, and more preferably 4.0. Preferably, all the hydroxyl groups contained in the high functionality polyol compound are primary hydroxyl groups, i.e. the high functionality polyol compound of the present disclosure does not comprise secondary hydroxyl group and tertiary hydroxyl group.

According to a preferable embodiment of the present disclosure, the polyol component does not comprise any polyol other than the polyol compound of the present disclosure. According to a more preferable embodiment of the present disclosure, the polyol component further comprises a second polyol selected from the group consisting of polycarbonate polyol, polyether polyol, polyester polyol other than the polyol compound, and combinations thereof. According to a more preferable embodiment of the present disclosure, the second polyol has a number average molecular weight Mn within the numerical range obtained by combining any two of the following end points: 200 g/mol, 300 g/mol, 400 g/mol, 500 g/mol, 600 g/mol, 700 g/mol, 800 g/mol, 900 g/mol, 1,000 g/mol, 1,200 g/mol, 1,500 g/mol, 1,800 g/mol, 2,000 g/mol, 2,200 g/mol, 2,500 g/mol, 2,800 g/mol, 3,000 g/mol, 3,200 g/mol, 3,500 g/mol, 3,800 g/mol, 4,000 g/mol, 4,200 g/mol, 4,500 g/mol, 4,800 g/mol, and 5,000 g/mol. According to a more preferable embodiment of the present disclosure, the second polyol is a hydroxyl terminated polyol having a hydroxyl functionality of at least 1.2, at least 1.5, at least 1.6, at least 1.8, at least 2.0, at least 2.2, at least 2.5, at least 2.8, at least 3, or at least 3.5, or at least 4.0, or at least 4.5, or at least 5.0, or at least 5.5, or at least 6.0, and more preferably 1.5 to 3.0. Preferably, all the hydroxyl groups contained in the second polyol are primary hydroxyl groups, i.e. the second polyol does not comprise secondary hydroxyl group and tertiary hydroxyl group. According to an embodiment of the present disclosure, the content of the polyol compound is from 40 wt% to 80 wt%, and the content of the second polyol is from 20 wt% to 60 wt%, based on the total weight of the (B) polyol component.

According to a preferable embodiment of the present application, the polyol compound can be synthesized by a esterification reaction at a temperature of 100°C to 300°C, such as 130°C to 250°C, or from 150°C to 230°C, or from 160 to 210°C, at an atmosphere pressure or reduced pressure of 0.001 to 1 bar, such as 0.01 to 0.9 bar, or from 0.1 to 0.9 bar, or from 0.2 to 0.9 bar, or from 0.3 to 0.9 bar, or from 0.5 to 0.9 bar, or from 0.8 to 0.9 bar, for a duration of 10 minutes to 10 hours, or from 0.5 hour to 8 hours, or from 1 hour to 5 hours, or from 1.5 to 4 hours, or from 2 to 3 hours, with or without the presence of esterification catalyst such as alkali catalyst or acid catalyst.

### The Application of the Adhesive Composition

According to various embodiments of the present disclosure, the two-component adhesive composition of the present disclosure may comprise one or more solvents or can be completely solventless. As disclosed herein, the terms "solvent free", "solventless" or "nonsolvent", can be used interchangeably used and shall be interpreted that the mixture of all the raw materials used for preparing the adhesive composition comprise less than 3% by weight, preferably less than 2% by weight, preferably less than 1% by weight, more preferably less than 0.5% by weight, more preferably less than 0.2% by weight, more preferably less than 0.1% by weight, more preferably less than 100 ppm by weight, more preferably less than 50 ppm by weight, more preferably less than 10 ppm by weight, more preferably less than 1ppm by weight of any organic or inorganic solvents, based on the total weight of the mixture of raw materials. As disclosed herein, the term "solvent" refers to organic and inorganic liquids whose function is solely dissolving one or more solid, liquid or gaseous materials without incurring any chemical reaction. In other words, although some organic compounds, e.g. ethylene glycol and propylene glycol, and water, which are generally considered as "solvent" in the polymerization technology, are used in the preparation of the two-component polyurethane-based adhesive composition, none of them belongs to "solvent" since they mainly function as isocyanate-reactive functional substance, or chain extending agent, etc. by incurring chemical reactions.

According to various embodiments of the present disclosure, the weight ratio between the isocyanate component (A) and the poloyl component (B) is from 100:30 to100:100. According to a preferable embodiment, said weight ratio can be in the numerical range obtained by combining any two of the following ratios: 100:30, 100:40, 100:50, 100:60, 100:70, 100:80, 100:90, and 100:100. According to a preferable embodiment of the present application, the weight ratio between the isocyanate component (A) and the polyol component (B) is adjusted so that the weight ratio between the prepolymer in the isocyanate component (A) and the polyol compound in the polyol component (B) is from 100: 10 to 100: 100, or from 100:20 to 100:90, or from 100:30 to 100:80, or can be in the numerical range obtained by combining any two of the following ratios: 100:30, 100:40, 100:45; 100:50, 100:55, 100:60, 100:65, 100:70, 100:75 and 100:80. One of the technical advantages of the present disclosure is that the bond strength and heat seal strength of the (cured) adhesive prepared by using the adhesive composition of the present disclosure will not be substantially deteriorated by the change in the above stated ratio. For example, the change in the magnitude of the bond strength and heat seal strength (with and without a BIB (boiling in bag) test) of the (cured) adhesive prepared by using the adhesive composition is less than ±20%, or less than ±15%, or less than ±10%, or less than ±8%, or less than ±6%, or less than ±5%, or less than ±3%, or less than ±2%, or less than ±1%, or less than ±0.5%, when the ratio weight ratio between the isocyanate compound (especially, the prepolymer comprising at least two isocyanate groups) in the isocyanate component (A) and the polyol compound in the polyol component (B) varies from 100:50 to 100:80, or varies from 100:50 to 100:40 or 100:45, with the bond strength and heat seal strength of the (cured) adhesive prepared by using the adhesive composition having a ratio of 100:50 being taken as 100%.

As stated above, the isocyanate component (A) and the polyol component (B) are transported and stored separately, combined shortly or immediately before being applied during the manufacture of the laminate article. In some embodiments, both the isocyanate component and the polyol component are liquid at ambient temperature. When it is desired to use the adhesive composition, the isocyanate component and the polyol component are brought into contact with each other and mixed together. Once mixed, polymerization (curing) reaction occurs between the free isocyanate groups in the isocyanate component (A) and the hydroxyl groups in the polyol component (B) to form a polyurethane which exhibit the function of adhesive in the adhesive layer between two or more substrates. The adhesive composition formed by bringing the two components into contact can be referred to as a "curable mixture".

One or more catalysts may be optionally used to promote or accelerate the above stated polymerization reaction for preparing the prepolymer in the isocyanate component (A) and/or the polymerization between the prepolymer of (A) and the polyol component (B).

The catalyst may include any substance that can promote the reaction between the isocyanate group and the hydroxyl group. Without being limited to theory, the catalysts can include, for example, glycine salts; tertiary amines; tertiary phosphines, such as trialkylphosphines and dialkylbenzylphosphines; morpholine derivatives; piperazine derivatives; chelates of various metals, such as those which can be obtained from acetylacetone, benzoylacetone, trifluoroacetyl acetone, ethyl acetoacetate and the like with metals such as Be, Mg, Zn, Cd, Pd, Ti, Zr, Sn, As, Bi, Cr, Mo, Mn, Fe, Co and Ni; acidic metal salts of strong acids such as ferric chloride and stannic chloride; salts of organic acids with variety of metals, such as alkali metals, alkaline earth metals, Al, Sn, Pb, Mn, Co, Ni and Cu; organotin compounds, such as tin(II) salts of organic carboxylic acids, e.g., tin(II) diacetate, tin(II) dioctanoate, tin(II) diethylhexanoate, and tin(II) dilaurate, and dialkyltin(IV) salts of organic carboxylic acids, e.g., dibutyltin diacetate, dibutyltin dilaurate, dibutyltin maleate and dioctyltin diacetate; bismuth salts of organic carboxylic acids, e.g., bismuth octanoate; organometallic derivatives of trivalent and pentavalent As, Sb and Bi and metal carbonyls of iron and cobalt; or mixtures thereof.

In general, the content of the catalyst used herein is larger than zero and is at most 1.0 wt%, preferably at most 0.5 wt%, more preferably at most 0.05wt%, based on the total weight of all the reactants.

The adhesive composition of the present disclosure may optionally comprise any additional auxiliary agents and/or additives for specific purposes.

In one embodiment of the present disclosure, one or more of the auxiliary agents and/or additives may be selected from the group consisting of other co-catalysts, surfactants, toughening agents, flow modifiers, adhesion promoters (such as such as aminosilane or epoxy silane or phosphate ester), diluents, stabilizers, plasticizers, catalyst de-activators, dispersing agents and mixtures thereof.

A method of producing a laminate article using said adhesive composition is also disclosed. In some embodiments, the adhesive composition, such as the adhesive composition discussed above, is in a liquid state. In some embodiments, the composition is a liquid at 25°C. Even if the composition is solid at 25°C, it is acceptable to heat the composition as necessary to convert it into a liquid state. A layer of the composition is applied to a surface of a substrate or a film. A "substrate/film" is any structure that is 0.5 mm or less in one dimension and is 1 cm or more in both of the other two dimensions. A polymer film is a film that is made of a polymer or mixture of polymers. The composition of a polymer film is, typically, 80 percent by weight or more by weight one or more polymers. In some embodiments, the thickness of the layer of the curable mixture applied to the film is 1 to 5 µm.

In some embodiments, a surface of another substrate/film is brought into contact with the layer of the curable mixture to form an uncured laminate. The adhesive composition may be applied by conventional lamination machine, e.g. Labo-Combi 400 machine from Nordmeccanica. The curable mixture is then cured or allowed to cure. The uncured laminate may be subjected to pressure, for example by passing through nip rollers, which may or may not be heated. The uncured laminate may be heated to speed the cure reaction. Suitable substrates/films include paper, woven and nonwoven fabric, metal foil, polymers, and metal-coated polymers. Films optionally have a surface on which an image is printed with ink; and the ink may be in contact with the adhesive composition. In some embodiments, the substrates/films are polymer films or metal-coated polymer films, and more preferred are polymer films.

The process of the present disclosure may be carried out continuously or batchwise. An example of the continuous process is a roll to roll process, in which a roll of a first substrate/film is unwound and transmitted through two or more work station where the isocyanate component (A) and the polyol component (B) are mixed to form the adhesive composition (curable mixture) of the present application which is applied onto a surface of the first substrate/film. The adhesive composition (curable mixture) of the present application can be applied more than once to achieve a desirable film thickness or composition profile. A second substrate/film may be applied onto the curable adhesive layer with or without the aid of rollers. Heating or irradiation devices may be arranged to promote the curing of the coated adhesive layer, and rollers can also be used for enhancing the adhesion strength within the laminate. The second substrate/film can be identical with or different from the first substrate/film and can also be unwound from a roll. The unwound substrates/films are generally from 10 to 20,000 meters, from 10 to 15,000 meters and preferably from 20 to 10,000 meters in length and are typically transmitted at a speed in the range from 0.1 to 60 m/min, preferably from 3 to 45m/min, more preferable from 5 to 15m/min. In the end of the continuous technology, the cured laminate product is wound up on a spindle.

The laminate article disclosed herein can be cut or otherwise shaped so as to have a shape suitable for any desired purpose, such as packaging material.

Although the last general description and the following examples mainly focus on a two-component PU-based adhesive composition, the unique hydroxyl compound of the present disclosure can be used as an isocyanate-reactive compound for any other polyurethane-based products, such as coating, paint, insulation material, packaging material, foam material, etc., and impart the above stated technical advantages to these products.

### EXAMPLES

Some embodiments of the invention will now be described in the following Examples, wherein all parts and percentages are by weight unless otherwise specified. However, the scope of the present disclosure is not, of course, limited to the formulations set forth in these examples. Rather, the Examples are merely inventive of the disclosure.

The information of the raw materials used in the examples is listed in the following table 1:

**Table 1. Raw materials used in the examples**

| Grade name | Characterization | Vendor |
|---|---|---|
| Adipic acid (AA) | 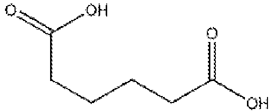 | TCl |
| TMP | Trimethylolpropane | TCl |
| PTT | Pentaerythrotol | TCl |
| Gl | Glycerol | TCl |
| Carbowax ^{™} PEG1000 | Polyethylene glycol having a Mn of about 1,000 and a hydroxyl functionality of 2 | The Dow Chemical Company |
| Carbowax ^{™} PEG400 | Polyethylene glycol having a Mn of about 400 and a hydroxyl functionality of 2 | The Dow Chemical Company |
| VORANOL^{™} CP450 | Polypropylene polyol having a Mn of 450 and a hydroxyl number of 378 | The Dow Chemical Company |
| Bester^{™} 90 | Polyester polyol and OH functionality=2 | The Dow Chemical Company |
| MorFree^{™}698A | A NCO terminated prepolymer NCO%=14.5 | The Dow Chemical Company |

### Synthesis Examples 1 to 4: The synthesis of the polyol compound of the present disclosure (multi-primary hydroxyl functionalized polyester polyol)

1 mol of Carbowax ^{™}PEG400 or Carbowax^{™} PEG1000 and 2 mol adipic acid were added into a flask equipped with stirring blade and oil bath, and were heated to a temperature of 210°C. The reaction continued for one hour to produce carboxyl end-capped intermediate compound. The reaction mixture was cooled to 160 °C and 2 mol trimethylolpropane, pentaerythrotol or glycerol was then added therein. The flask was reheated to 210°C held until the mixture within the flask shows an acid number less than 3.0. The reaction product was then dried under a vacuum degree of 880 mbar (26 inches mercury) at 210 °C for an hour to achieve an acid value of 1.0 mg KOH/g. The polyesther polyol prepared in the Synthesis Examples 1 to 3 were referred as HF 1 to HF 4 respectively.

Then the OH number (measured according to ASTM D6342:2008) and viscosity (measured according to GB-T 12008.8-1992) of the resultant product was characterized and summarized in Table 2.

**Table 2. Formulations and properties of the multi-primary hydroxyl functionalized polyester polyol**

| | Composition | Loading ratio | OH number (mgKOH/g) | Viscosity (cp@25C) |
|---|---|---|---|---|
| Synthesis Example 1: HF1 | PEG400-AA-TMP | 1:2:2 | 250 | 5800 |
| Synthesis Example 2: HF2 | PEG1000-AA-TMP | 1:2:2 | 150 | 5000 |
| Synthesis Example 3: HF3 | PEG1000-AA-PTT | 1:2:2 | 226 | 5900 |
| Synthesis Example 4: HF4 | PEG400-AA-Gl | 1:2:2 | 286 | 6500 |

### Examples 1-4 and Comparative Examples 1-2

HF1 to HF4 were mixed with VORANOL^{™} CP450 to form the polyol component (B) as shown in the following Table 3, and these polyol components (B) were used in the inventive examples 1 to 4. A comparative polyol component (B) was also prepared by mixing a polyether polyol (VORANOL^{™} CP450) with a polyester polyol (Bester^{™} 90) and used in the two comparative examples.

**Table 3. The formulations of the polyol component (B) for Examples 1 to 4 and Comparative Examples 1 to 2**

| | Composition and loading ratio | OH number (mgKOH/g) |
|---|---|---|
| B1 | CP450/HF1=35/65 | 294 |
| B2 | CP450/HF2=35/65 | 230 |
| B3 | CP450/HF335/65 | 279 |
| B4 | CP450/Bester^{™} 90=35/65 | 240 |
| B5 | CP450/HF4=35/65 | 321 |

The adhesive compositions of Examples 1 to 4 and Comparative Examples 1 to 2 were synthesized according to the formulations listed in Table 4, and the bond strength (BS) and heat seal strength (HS) thereof were characterized by using the following technologies.

**Table 4: The formulations Examples 1-8 and Comparative Examples 1-2**

| | Composition |
|---|---|
| Comparative example (CE1):a | MorFree^{™}698A/B4=100:55 |
| Comparative example (CE2): b | MorFree^{™}698A/B4=100:75 |
| Inventive example (IE1) | MorFree^{™}698A/B1=100:45 |
| Inventive example (IE2) | MorFree^{™}698A/B1=100:63 |
| Inventive example (IE3) | MorFree^{™}698A/B2=100: 57 |
| Inventive example (IE4) | MorFree^{™}698A/B2=100:80 |
| Inventive example (IE5) | MorFree^{™}698A/B3=100:47 |
| Inventive example (IE6) | MorFree^{™}698A/B3=100:66 |
| Example (E7) | MorFree^{™}698A/B5=100:38 |
| Example (E8) | MorFree^{™}698A/B5=100:54 |

Examples 7 and 8 do not fall within the scope of the present invention.

The polyol components prepared in Table 3 were paired with Dow commercial product (NCO prepolymer) MorFree^{™}698A at the ratios shown in Table 4 to form the adhesives and subject to performance evaluation.

Laminates were prepared with these adhesives in a Labo-Combi 400 machine from Nordmeccanica under the following processing conditions: line speed was set as 120 mpm and 150 mpm, temperature of transfer roller was 45° C, nip temperature was set as 60° C, and coating weight was set as 1.8 gsm. Different substrates were selected to form PET/PE60 as testing laminate structures, which were characterized with the following technologies.

### Test methods

### Bond Strength (BS)

Laminates prepared with the adhesive compositions, a PET substrate and a PE60 substrate were cut into 15mm width strips for T-peel test under 250 mm/min crosshead speed using a 5940 Series Single Column Table Top System available from Instron Corporation. During the test, the tail of each strip was pulled slightly by fingers to make sure the tail remained 90 degree to the peeling direction. Three strips for each sample were tested and the average value was calculated. Results were represented with the unit of N/15mm. A higher value represents a better the bond strength.

### Heat Seal Strength (HS)

Laminates prepared with the adhesive compositions, a PET substrate and a PE60 substrate were heat-sealed in a HSG-C Heat-Sealing Machine available from Brugger Company under 140°C seal temperature and 300N pressure for 1 second, then cooled down and cut into 15mm width strips for heat seal strength test under 250 mm/min crosshead speed using a 5940 Series Single Column Table Top System available from Instron Corporation. Three strips for each sample were tested and the average value was calculated. Results were represented with the unit of N/15 mm. A higher value represents a better heat seal strength.

### Boil in Bag (BiB)

Laminates prepared with the adhesive compositions were cut into 8cmx12cm pieces which were heat sealed to form a bag with water enclosed therein. Then the bag was immersed in boiling water and held for 30 minutes, during which the bag was kept completely immersed in the boiling water. After the 30 minute boiling, the bag was inspected for any defects such as tunneling, de-lamination, or leakage, and the extents of said defects, if any, were recorded. A sample that passed the test should show no evidence of tunneling, de-lamination, or leakage. The bag was opened, emptied and cooled down, and then cut into 15 mm width strips to test the T-peel bonding strength and heat seal strength thereof in an Instron 5943 machine. Three strips for each sample were tested and the average value was calculated.

The Bond Strength, Heat Seal Strength and BiB properties were summarized in Table 5, from which it can be seen that all the inventive examples exhibit superior HS and BS which will not be deteriorated to an unacceptable extent no matter how the ratio between the two components changes, while the comparative example exhibits much higher deterioration in the HS and BS when the ratio between component (A) and component (B) varies and will form tunnel during the Boil in Bag (BiB) treatment.

**Table 5 Performance Evaluation Results on PET/PE60 laminates**

| | BS (N/15mm) | HS (N/15mm) | BS after BiB (N/15mm) | HS after BiB (N/15mm) |
|---|---|---|---|---|
| Comparative example (CE1):a | 2.6 | 47 | 2.5 | 50 |
| Comparative example (CE2): b | 2.6 | 48 | delaminate | delaminate |
| Inventive example (IE1) | 2.9 | 51 | 2.8 | 50 |
| Inventive example (IE2) | 2.7 | 52 | 2.9 | 49 |
| Inventive example (IE3) | 3.0 | 50 | 2.9 | 49 |
| Inventive example (IE4) | 2.8 | 52 | 2.7 | 50 |
| Inventive example (IE5) | 3.1 | 54 | 2.9 | 50 |
| Inventive example (IE6) | 3.0 | 52 | 3.0 | 51 |
| Example (E7) | 2.7 | 45 | 2.5 | 46 |
| Example (E8) | 2.6 | 46 | 1.8 | 36 |

Examples 7 and 8 do not fall within the scope of the present invention.

## Claims

1. A polyol compound having a structure represented by Formula I: 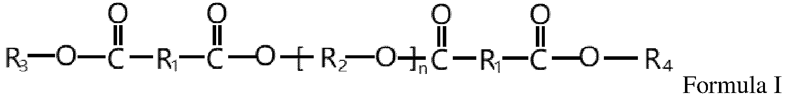
wherein R₁ is a linear C₁-C₁₀ alkylene group which is unsubstituted or substituted with at least one pendant group selected from the group consisting of C₁-C₅ alkyl, C₁-C₅ alkoxy, hydroxyl, halogen, and combinations thereof;
R₂ is a linear C₂-C₈ alkylene group which is unsubstituted or substituted with at least one pendant groups selected from the group consisting of C₁-C₅ alkyl, C₁-C₅ alkoxy, hydroxyl, halogen, and combinations thereof;
R₃ and R₄ are identical with each other or different from each other, and are independently selected from the group consisting of 2,2-di(methylol)ethyl, 2,2-di(methylol)propyl, 2,2-di(methylol)butyl, and 2,2,2-tri(methylol)ethyl; and n is an integer of 5 to 500.

2. A method for preparing the polyol compound according to claim 1 comprising:
i) reacting a dicarboxylic acid compound represented by HOC(O)-R₁-COOH, or anhydride thereof, with a poly(alkylene oxide) represented by HO-[R₂-O]ₙ-H to form an intermediate compound terminated on both ends with carboxyl acid group; and
ii) reacting the intermediate compound with a hydroxyl-substituted C₂ to C₈ alkane having at least two primary hydroxyl groups, to form said polyol compound, wherein the hydroxyl-substituted C₂ to C₈ alkane is selected from the group consisting of trimethylolmethane, trimethylolethane, trimethylolpropane, pentaerythritol, and combinations thereof;
wherein R₁ is a linear C₁-C₁₀ alkylene group which is unsubstituted or substituted with at least one pendant groups selected from the group consisting of C₁-C₅ alkyl, C₁-C₅ alkoxy, hydroxyl, halogen, and combinations thereof;
R₂ is a linear C₂-C₈ alkylene group which is unsubstituted or substituted with at least one pendant groups selected from the group consisting of C₁-C₅ alkyl, C₁-C₅ alkoxy, hydroxyl, halogen, and combinations thereof; and
n is an integer of 5 to 500.

3. An adhesive composition, comprising:
(A) an isocyanate component comprising a prepolymer with at least two free isocyanate groups; and
(B) a polyol component comprising the polyol compound according to claim 1.

4. The adhesive composition according to claim 3, wherein the polyol component further comprises at least one second polyol selected from the group consisting of polycarbonate polyol, polyether polyol, polyester polyol other than the polyol compound according to claim 1, and combinations thereof.

5. The adhesive composition according to claim 3, wherein the prepolymer is prepared by reacting an isocyanate compound having at least two isocyanate groups with the polyol compound according to claim 1.

6. The adhesive composition according to claim 4, wherein the content of the polyol compound according to claim 1 is from 40 wt% to 80 wt%, and the content of the second polyol is from 20 wt% to 60 wt%, based on the total weight of the (B) polyol component.

7. The adhesive composition according to claim 3, wherein the weight ratio between the (A) isocyanate component and the (B) polyol component is from 100:30 to 100:100; and
the adhesive composition comprises solvent or is solventless.

8. A method for preparing a laminate article with the adhesive composition according to claim 3, comprising the steps of
providing a first substrate and a second substrate,
mixing the (A) isocyanate component with the (B) polyol component to form a curable mixture;
adhering the first substrate to the second substrate by using a layer of the curable mixture; and
curing the curable mixture, or allowing it to cure.

9. A laminate article comprising at least two substrates and an adhesive layer sandwiched therebetween, wherein the adhesive layer is formed by the reaction between the (A) isocyanate component and the (B) polyol component of the adhesive composition according to claim 3.

## Patentansprüche

1. Polyolverbindung mit einer Struktur, die durch Formel I dargestellt ist: 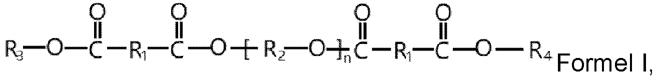
wobei R₁ eine lineare C₁-C₁₀-Alkylengruppe ist, die unsubstituiert oder mit zumindest einer anhängigen Gruppe substituiert ist, die aus der Gruppe ausgewählt ist, die aus C₁-C₅-Alkyl, C₁-C₅-Alkoxy, Hydroxyl, Halogen und Kombinationen davon besteht;
R₂ eine lineare C₂-C₈-Alkylengruppe ist, die unsubstituiert oder mit zumindest einer anhängigen Gruppe substituiert ist, die aus der Gruppe ausgewählt ist, die aus C₁-C₅-Alkyl, C₁-C₅-Alkoxy, Hydroxyl, Halogen und Kombinationen davon besteht;
R₃ und R₄ identisch sind oder sich voneinander unterscheiden und unabhängig aus der Gruppe ausgewählt sind, die aus 2,2-Di(methylol)ethyl, 2,2-Di(methylol)propyl, 2,2-Di(methylol)butyl und 2,2,2-Tri(methylol)ethyl besteht; und n eine ganze Zahl von 5 bis 500 ist.

2. Verfahren zum Herstellen der Polyolverbindung nach Anspruch 1, das umfasst:
i) Umsetzen einer Dicarbonsäureverbindung, die durch HOC(O)-R₁-COOH dargestellt ist, oder eines Anhydrids davon mit einem Poly(alkylenoxid), das durch HO-[R₂-O]ₙ-H dargestellt ist, um eine Zwischenverbindung zu bilden, die an beiden Enden mit einer Carboxylsäuregruppe endet; und
ii) Umsetzen der Zwischenverbindung mit einem hydroxylsubstituiertem C₂- bis C₈-Alkan mit zumindest zwei primären Hydroxylgruppen, um die Polyolverbindung zu bilden, wobei das hydroxylsubstituierte C₂- bis C₈-Alkan aus der Gruppe ausgewählt ist, die aus Trimethylolmethan, Trimethylolethan, Trimethylolpropan, Pentaerythrit und Kombinationen davon besteht;
wobei R₁ eine lineare C₁-C₁₀-Alkylengruppe ist, die unsubstituiert oder mit zumindest einer anhängigen Gruppe substituiert ist, die aus der Gruppe ausgewählt ist, die aus C₁-C₅-Alkyl, C₁-C₅-Alkoxy, Hydroxyl, Halogen und Kombinationen davon besteht;
R₂ eine lineare C₂-C₈-Alkylengruppe ist, die unsubstituiert oder mit zumindest einer anhängigen Gruppe substituiert ist, die aus der Gruppe ausgewählt ist, die aus C₁-C₅-Alkyl, C₁-C₅-Alkoxy, Hydroxyl, Halogen und Kombinationen davon besteht;
n eine ganze Zahl von 5 bis 500 ist.

3. Haftmittelzusammensetzung, die umfasst:
(A) eine Isocyanatkomponente, die ein Vorpolymer mit zumindest zwei freien Isocyanatgruppen umfasst; und
(B) eine Polyolkomponente, die die Polyolverbindung nach Anspruch 1 umfasst.

4. Haftmittelzusammensetzung nach Anspruch 3, wobei die Polyolkomponente ferner zumindest ein zweites Polyol umfasst, das aus der Gruppe ausgewählt ist, die aus Polycarbonatpolyol, Polyetherpolyol, Polyesterpolyol mit Ausnahme der Polyolverbindung nach Anspruch 1 und Kombinationen davon besteht.

5. Haftmittelzusammensetzung nach Anspruch 3, wobei das Vorpolymer durch Umsetzen einer Isocyanatverbindung mit zumindest zwei Isocyanatgruppen mit der Polyolverbindung nach Anspruch 1 hergestellt wird.

6. Haftmittelzusammensetzung nach Anspruch 4, wobei der Gehalt der Polyolverbindung nach Anspruch 1 40 Gew.-% bis 80 Gew.-% und der Gehalt des zweiten Polyols 20 Gew.-% bis 60 Gew.-% in Bezug auf das Gesamtgewicht der (B) Polyolkomponente beträgt.

7. Haftmittelzusammensetzung nach Anspruch 3, wobei das Gewichtsverhältnis zwischen der (A) Isocyanatkomponente und der (B) Polyolkomponente 100:30 bis 100:100 beträgt; und
die Haftmittelzusammensetzung Lösungsmittel umfasst oder lösungsmittelfrei ist.

8. Verfahren zum Herstellen eines Laminaterzeugnisses mit der Haftmittelzusammensetzung nach Anspruch 3, das die Schritte umfasst
Bereitstellen eines ersten Substrats und eines zweiten Substrats,
Mischen der (A) Isocyanatkomponente mit der (B) Polyolkomponente, um eine härtbare Mischung zu bilden;
Anhaften des ersten Substrats an dem zweiten Substrat unter Verwendung einer Schicht aus dem härtbaren Gemisch; und
Härten des härtbaren Gemischs oder Härtenlassen davon.

9. Laminaterzeugnis, das zumindest zwei Substrate und eine Haftmittelschicht umfasst, die sandwichartig dazwischen aufgenommen ist, wobei die Haftmittelschicht durch die Reaktion zwischen der (A) Isocyanatkomponente und der (B) Polyolkomponente der Haftmittelzusammensetzung nach Anspruch 3 gebildet wird.

## Revendications

1. Composé polyol ayant une structure est représentée par la formule I : 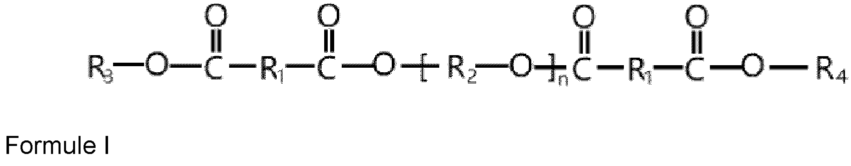
dans lequel R₁ est un groupe alkylène linéaire en C₁ à C₁₀ qui est non substitué ou substitué par au moins un groupe pendant choisi dans le groupe constitué par un groupe alkyle en C₁ à Cs, un groupe alcoxy en C₁ à Cs, un groupe hydroxyle, un atome d'halogène et des combinaisons de ceux-ci ;
R₂ est un groupe alkylène linéaire en C₂ à C₈ qui est non substitué ou substitué par au moins un groupe pendant choisi dans le groupe constitué par un groupe alkyle en C₁ à Cs, un groupe alcoxy en C₁ à Cs, un groupe hydroxyle, un atome d'halogène et des combinaisons de ceux-ci ;
R₃ et R₄ sont identiques l'un de l'autre ou différents l'un de l'autre et sont indépendamment choisis dans le groupe constitué par un groupe 2,2-di(méthylol)éthyle, un groupe 2,2-di(méthylol)propyle, un groupe 2,2-di(méthylol)butyle et un groupe 2,2,2-tri(méthylol)éthyle ; et n est un nombre entier de 5 à 500.

2. Procédé de préparation du composé polyol selon la revendication 1 comprenant :
i) la réaction d'un composé acide dicarboxylique représenté par HOC(O)-R₁-COOH, ou d'un anhydride de celui-ci, avec un poly(oxyde d'alkylène) représenté par HO-[R₂-O]ₙ-H pour former un composé intermédiaire se terminant sur les deux extrémités par un groupe acide carboxylique ; et
ii) la réaction du composé intermédiaire avec un alcane en C₂ à C₈ substitué par un groupe hydroxyle ayant au moins deux groupes hydroxyle primaires, pour former ledit composé polyol, dans lequel l'alcane en C₂ à C₈ substitué par un groupe hydroxyle est choisi dans le groupe constitué par le triméthylolméthane, le triméthyloléthane, le triméthylolpropane, le pentaérythritol et des combinaisons de ceux-ci ;
dans lequel R₁ est un groupe alkylène linéaire en C₁ à C₁₀ qui est non substitué ou substitué par au moins un groupe pendant choisi dans le groupe constitué par un groupe alkyle en C₁ à Cs, un groupe alcoxy en C₁ à Cs, un groupe hydroxyle, un atome d'halogène et des combinaisons de ceux-ci ;
R₂ est un groupe alkylène linéaire en C₂ à C₈ qui est non substitué ou substitué par au moins un groupe pendant choisi dans le groupe constitué par un groupe alkyle en C₁ à Cs, un groupe alcoxy en C₁ à Cs, un groupe hydroxyle, un atome d'halogène et des combinaisons de ceux-ci ; et
n est un nombre entier de 5 à 500.

3. Composition adhésive comprenant :
(A) un composant isocyanate comprenant un prépolymère ayant au moins deux groupes isocyanate libres ; et
(B) un composant polyol comprenant le composé polyol selon la revendication 1.

4. Composition adhésive selon la revendication 3, dans laquelle le composant polyol comprend en outre au moins un deuxième polyol choisi dans le groupe constitué par un polycarbonate polyol, un polyéther polyol, un polyester polyol autre que le composé polyol selon la revendication 1, et des combinaisons de ceux-ci.

5. Composition adhésive selon la revendication 3, dans laquelle le prépolymère est préparé par réaction d'un composé isocyanate ayant au moins deux groupes isocyanate avec le composé polyol selon la revendication 1.

6. Composition adhésive selon la revendication 4, dans laquelle la teneur en composé polyol selon la revendication 1 est de 40 % à 80 % en poids, et la teneur en deuxième polyol est de 20 % à 60 % en poids, en se basant sur le poids total du composant polyol (B).

7. Composition adhésive selon la revendication 3, dans laquelle le rapport pondéral entre le composant isocyanate (A) et le composant polyol (B) est de 100:30 à 100:100 ; et
la composition adhésive comprend un solvant ou est sans solvant.

8. Procédé de préparation d'un article stratifié avec la composition adhésive selon la revendication 3, comprenant les étapes de
fournir un premier substrat et un deuxième substrat,
mélanger le composant isocyanate (A) et le composant polyol (B) pour former un mélange durcissable ;
faire adhérer le premier substrat sur le deuxième substrat en utilisant une couche du mélange durcissable ; et
durcir le mélange durcissable, ou le laisser durcir.

9. Article stratifié comprenant au moins deux substrats et une couche adhésive intercalée entre ceux-ci, dans lequel la couche adhésive est formée par la réaction entre le composant isocyanate (A) et le composant polyol (B) de la composition adhésive selon la revendication 3.
